# EUROPÄISCHE PATENTANMELDUNG

(11) **EP 2 805 813 A1**
(43) Veröffentlichungstag der Anmeldung: **26.11.2014**
(21) Anmeldenummer: 14157131.5
(22) Anmeldetag: 28.02.2014
(51) Int. Cl.: B32B 5/10, B32B 5/12, B32B 15/02, B32B 15/08, B32B 15/085, B32B 15/18, B32B 15/20, B32B 27/12, B32B 27/30, B32B 1/08, F16L 11/04, F16L 11/08, F16L 11/10

(54) **Flexibler Schlauch**

(30) Priorität: 23.05.2013 DE 102013105251
(71) Anmelder: ContiTech Schlauch GmbH, 30165 Hannover (DE)
(72) Erfinder: Onken, Kristian, 34117 Kassel (DE); Mroz, Michael, 37154 Northeim (DE); Epp, Bernhard, 34477 Twistetal (DE)
(74) Vertreter: Preusser, Andrea

(57) **Zusammenfassung**

Die Erfindung betrifft einen flexiblen Schlauch, welcher mehrschichtig ist und wenigstens zwei Schichten enthält, wobei die äußere Schicht aus wenigstens einem Metall besteht und die innere Schicht aus einer Kombination wenigstens eines Styrol-Oligoblock-Copolymers (TPE-S bzw. TPES) und wenigstens eines Polyolefins aufgebaut ist.

Der flexible Schlauch ist insbesondere ein Trinkwasserschlauch, bevorzugt ein Panzerschlauch.

## Beschreibung

Die Erfindung betrifft einen flexiblen Schlauch, insbesondere einen Trinkwasserschlauch.

Elastomerschläuche im Trinkwasserbereich unterliegen in Deutschland strengen gesetzlichen Vorgaben. So sollen z.B. keine organischen Verbindungen aus der Elastomermischung in das Medium übergehen und es darf keine geruch- oder geschmackliche Veränderung des Mediums erfolgen. Die gesetzlichen Anforderungen an einen Trinkwasserschlauch sind in der Trinkwasserverordnung festgelegt und werden konkret durch die KTW-Empfehlungen (KTW-Leitlinie, TPE-Übergangsempfehlung, Elastomerleitlinie), die DVGW W270 (Mikrobenwachstum) und DVGW VP549 umgesetzt. Die hohen gesetzlichen Anforderungen können bislang nicht durch reine (klassische) Elastomermischungen wie z.B. NBR- und EPDM-Mischungen erfüllt werden, da einige der Inhaltsstoffe (z.B. Vernetzungsmittel, Hilfsstoffe oder Füllstoffe) eine geruchs- und/oder geschmacksbeeinflussende Wirkung haben oder wie bei den Weichmachern, eine mikrobenwachstumsfördernde Wirkung, die sich bei der durchzuführenden DVGW W270-Prüfung negativ auswirkt. Aufgrund dieser Tatsache werden derzeit im Trinkwasserbereich häufig Kunststoffrohre verwendet, die ausschließlich aus Polyolefinen wie z.B. PE, PP, X-PE oder PVC gefertigt sind, siehe beispielsweise WO2009/002653 oder DE20311708U1. Nachteilig bei der Verwendung von Kunststoffrohren ist die Steifigkeit bzw. mangelnde Flexibilität des Materials, was sich bei der Verarbeitung und im Einsatz negativ auswirkt. Zudem können bei vernetzten Kunststoffen Spaltprodukte das Medium verunreinigen oder weichermacherhaltige Kunststoffe das Mikrobenwachstum fördern.

Alternativ dazu gibt es Elastomerschläuche mit einer dünnen, als Folie ausgebildeten Kunststoffinnenschicht, so genannte Inlinerschläuche, wobei die dünne Folie eine Migration von Substanzen und Gerüchen aus dem Elastomer ins Medium verhindert und das Mikrobenwachstum hemmt bzw. verhindert. Siehe beispielsweise DE102005004735, JP02138587 oder JP03134392.
Nachteilig an derartigen Elastomerschläuchen mit dünnem Kunststoffinliner ist der hohe Herstellungsaufwand dieser Zwei-Schichtsysteme, für die es zwei verschiedene Produktionsmethoden gibt: Zum Einen eine Kunststoffextrusion auf Dorn und anschließende Elastomerextrusion und zum Zweiten das Wickeln von Kunststofffolie um den Dorn und anschließende Elastomerextrusion. Beide Arten der Herstellung sind zeitaufwendig, erfordern einen umfangreichen Maschinenpark und machen den Schlauch kostenintensiv. Insbesondere bei Schläuchen mit kleinem Innendurchmesser kann daher nur die Einschicht-Extrusion, d.h. nur eine Materialsorte, eine wirtschaftliche Produktionsmethode sein.

Eine weitere Gruppe von Trinkwasserschläuchen sind Silikonschläuche, welche jedoch aufgrund der hohen Rohstoffpreise von Silikonelastomeren gegenüber Kunststoffen nicht wettbewerbsfähig sind und in ihrer Verarbeitung nicht einfach zu handhaben sind. Derzeit werden Silikonschläuche meist aus Alternativlosigkeit eingesetzt.

Seit kurzer Zeit wird eine neue Materialklasse für die Herstellung von Trinkwasserschläuchen verwendet. Dabei handelt es sich um sogenannte thermoplastische Elastomere (TPE), welche eine Kombination aus Kunststoff und Elastomer darstellen. Diese sind bereits für Produkte im medizinischen Bereich beschrieben, siehe bspw. EP1711558B1. Es gibt eine Vielzahl von TPE auf dem Markt, z.B. TPO, TPS, TPU, die sich in Ihren chemischen Strukturen und ihren Verhalten stark unterscheiden. Vorteil von TPE sind u.a. ihre einfache Verarbeitbarkeit in gängigen Kunststoffextrudern und ihre Wiederverwertbarkeit, da TPE reversibel vernetzen, sie also durch Wärmezufuhr mehrmals aufgeschmolzen und verarbeitet werden können und dabei Ihre elastischen Eigenschaften beibehalten. Häufig werden TPE-Schläuche mit einer Kunststoffinnenschicht ausgestattet, siehe z.B. DE69604338 T2 oder DE10349011A1, um die hohen Anforderungen, gerade in Bezug auf die Weichmachermigration, zu erfüllen. Diese Mehrschichtextrusion stellt aber keine eigentliche Verbesserung gegenüber den Elastomerschläuchen mit Kunststoffinliner dar.

Neben der Erfüllung der KTW-Empfehlungen (z.B. KTW-Leitlinie und Elastomerleitlinie) und der DVGW W270-Prüfung (Mikrobenwachstum), müssen Trinkwasserschläuche für Anwendungen im Sanitärbereich, wie z.B. Waschbeckenzulaufschläuche mit Stahlumflechtung, die oft auch als Panzerschläuche bezeichnet werden, auch die DVGW W543 (Heißwasserbereich bis 85°C) erfüllen.

Besonders für diesen Einsatzzweck werden elastische Schläuche benötigt, die sich einfach, effizient und kostengünstig in hoher Stückzahl fertigen lassen, von guter Qualität sind und die gesetzlichen Anforderungen erfüllen. Mit den oben beschriebenen Schlauchvarianten ist dieses aufgrund der aufgeführten Nachteile nicht möglich.

Im Rahmen einer Weiterentwicklung besteht die Aufgabe der Erfindung daher darin, einen flexiblen Schlauch bereitzustellen, der möglichst weichmacherfrei, geruchs- und geschmacksneutral ist, der ohne Kunststoffinliner auskommt und der die gesetzlichen Anforderungen erfüllt.

Gelöst wird diese Aufgabe dadurch, dass der flexible Schlauch mehrschichtig ist und wenigstens zwei Schichten enthält, wobei die äußere Schicht aus wenigstens einem Metall besteht und die innere Schicht aus einer Kombination wenigstens eines Styrol-Oligoblock-Copolymers (TPE-S bzw. TPES) und wenigstens eines Polyolefins aufgebaut ist.

Überraschenderweise hat sich gezeigt, dass ein flexibler Schlauch, insbesondere ein Panzerschlauch, die oben genannten Anforderungen erfüllt, wenn die innere Schicht aus einer Kombination wenigstens eines TPES und wenigstens eines Polyolefins aufgebaut ist. Zusätzlich ist ein derartiger Schlauch effizient und kostengünstig herzustellen, da ein dornloses Herstellverfahren bzw. ein Extrusionsverfahren angewandt werden kann.

Als TPES können alle der fachkundigen Person bekannten TPES verwendet werden. Besonders geeignet sind bspw. Polystyrol-b-poly(ethylen/propylen) (SEP, hydriertes poly(styrol-b-isopren), CAS-Nr. 68648-89-5) und / oder Polystyrol-b-(polyethylen/propylen)-b-polystyrol (SEPS, hydriertes poly(styrol-b-isopren-b-styrol), CAS-Nr. 68648-89-5) und / oder Polystyrol-b-Poly(ethylen/propylen)-b-polystyrol (SEBS, hydriertes poly(styrol-b-butadien-b-styrol), CAS-Nr. 66070-58-4) und / oder Polystyrol-b-poly(ethylen-ethylen/propylen)-b-polystyrol (SEEPS, hydriertes poly(styrol-b-isopren/butadien-b-styrol), CAS-Nr. 132778-07-5) und / oder Poly(styrol-b-isopren-b-styrol (SIS, Poly(styrol-b-isopren-b-styrol), CAS-Nr. 25038-32-8 und / oder Polystyrol-b-poly(ethylene/propylene)-b-polystyrol (SEPS, hydriertes poly(styrol-b-isopren-b-styrol), CAS-Nr. 68648-89-5) und / oder Polystyrol-b-poly(ethylene-ethylen/propylen)-b-polystyrol (SEEPS, hydriertes poly(styrol-b-isopren/butadien-b-styrol), CAS-Nr. 366803-77-2).
Insbesondere die Verwendung von SEEPS mit der CAS-Nr. 132778-07-5 und der Struktur (I) 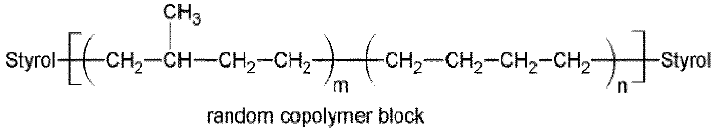 und / oder die Verwendung von SEEPS mit der CAS-Nr. 366803-77-2 und der Struktur (II) 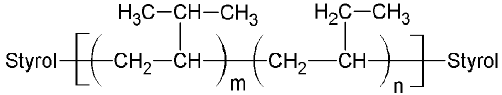 hat sich als besonders vorteilhaft gezeigt, wobei hier zur weiteren Reduzierung der Weichmacher bzw. zur vollständigen Freiheit von Weichmachern SEEPS mit der CAS-Nr. 366803-77-2 und der Struktur (II) ganz besonders bevorzugt ist.

Der Gehalt an Weichmacher beträgt bevorzugt 0 bis 3 Gew. -%.
Vollständige Freiheit von Weichmachern bedeutet, dass der Anteil an Weichmachern 0 Gew.-% beträgt.

Als Polyolefin (PO) können alle der fachkundigen Person bekannten Polyolefine, wie bspw. Polypropylen, Polyethylen, etc., verwendet werden. Die verwendeten Polyolefine sollten zur Anwendung im Trinkwasserbereich trinkwasserzugelassen sein. Geeignet hierfür sind bspw. Polyethylen (PE), hierbei insbesondere die Typen PE-MD und / oder PE-HD. Ein geeignetes PE-HD ist zum Beispiel Hostalen^{®} CRP 100 blue der Fa. Basell. Das Polyolefin kann transparent oder für optische Zwecke gefärbt sein. Somit lässt sich ein transparenter oder gefärbter, z. Bsp. blauer oder schwarzer, Trinkwasserschlauch herstellen.

Das Mischungsverhältnis von TPES zu Polyolefin (TPES / PO) beträgt bevorzugt 2 bis 54 M-% TPES zu 46 bis 98 M-% Polyolefin, besonders bevorzugt 30 bis 54 M-% TPES zu 46 bis 70 M-% Polyolefin, ganz besonders bevorzugt 40 bis 54 M-% TPES zu 46 bis 60 M-% Polyolefin. Das Gemisch liegt in einer besonders bevorzugten Ausführungsform als Granulat vor und wird an einem üblichen Kunststoffextruder zu einem Mono-Rohr ausgeformt, welches ein Bauteil des flexiblen Schlauches, insbesondere des Panzerschlauches, bildet. Der Schlauch kann dornlos, als so genannte freie Extrusion, oder auf einem Dorn produziert werden. Bevorzugt ist hierbei die dornlose Herstellung, da sie in der Regel einfacher und kostengünstiger ist.

Aufgrund der speziellen chemischen Struktur des TPES besitzt der Schlauch eine hohe Flexibilität und kann vollkommen frei von Weichmachern ausgebildet werden. Das zugesetzte Polyolefin besitzt eine Trinkwasserzulassung und verbessert die Extrusionseigenschaften, die physikalischen und sensorischen Eigenschaften und macht den Schlauch zudem deutlich kostengünstiger.
Die Mischung TPES/Polyolefin kann an einem gängigen Kunststoffextruder verarbeitet werden, sie kann thermoplastisch in alle möglichen Formen (z.B. Zylinder/Folien/Bänder) gebracht werden, wobei sie ihre Flexibilität beibehält. Gegenüber Gummi kann das Material mehrfach (reversibel) verarbeitet werden. Die nach dem bisherigen Stand der Technik notwendige Kunststoffinnenschicht ist somit nicht mehr notwendig.

Die äußere Schicht des flexiblen Schlauches besteht aus wenigstens einem Metall oder einer Metalllegierung. Die äußere Schicht kann einlagig oder mehrlagig sein. Hierbei handelt es sich bevorzugt um Stahl oder Kupfer, besonders bevorzugt um Stahlgeflecht und / oder Kupfergeflecht. Bei Verwendung eines Stahl- und / oder Kupfergeflechtes wird das oben beschriebene Bauteil aus TPES und Polyolefin mit dem Geflecht umflochten. Die äußere Schicht kann wie bereits erwähnt einlagig oder mehrlagig sein.
Der flexible Schlauch enthält erfindungsgemäß wenigstens zwei Schichten. Dies bedeutet, es können gegebenenfalls in dem Schlauch noch weitere Schichten, z. Bsp. Verstärkungsschichten, so genannte Festigkeitsträgerschichten, oder Polymerschichten vorhanden sein. Bevorzugt ist es allerdings, wenn der flexible Schlauch aus zwei Schichten, nämlich der inneren Schicht aus TPES und Polyolefin und der äußeren Schicht aus Metall, besteht.

### Schematische Zeichnung

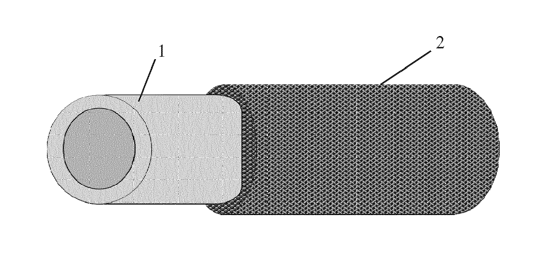

- Fig. 1: zeigt einen Panzerschlauch aufgebaut aus einer inneren Schicht 1, aufgebaut aus SEEPS und PE-HD, und einer äußeren Schicht 2, bestehend aus einem Stahldrahtgeflecht.

### Bezugszeichenliste

### (Teil der Beschreibung)

- 1: innere Schicht
- 2: äußere Schicht

## Patentansprüche

1. Flexibler Schlauch enthaltend wenigstens eine innere Schicht (1) und eine äußere Schicht (2), **dadurch gekennzeichnet, dass** die äußere Schicht (2) aus wenigstens einem Metall besteht und die innere Schicht (1) aus einer Kombination wenigstens eines Styrol-Oligoblock-Copolymers (TPE-S bzw. TPES) und wenigstens eines Polyolefins aufgebaut ist.

2. Flexibler Schlauch nach Anspruch 1, **dadurch gekennzeichnet, dass** die äußere Schicht (2) aus einem Stahldrahtgeflecht besteht.

3. Flexibler Schlauch nach Anspruch 1 oder 2, **dadurch gekennzeichnet, dass** das TPES Polystyrol-b-poly(ethylen-ethylen/propylen)-b-polystyrol (SEEPS, hydriertes poly(styrol-b-isopren/butadien-b-styrol), CAS-Nr. 132778-07-5) und / oder Polystyrol-b-poly(ethylen-ethylen/propylen)-b-polystyrol (SEEPS, hydriertes poly(styrol-b-isopren/butadien-b-styrol), CAS-Nr. 366803-77-2) ist.

4. Flexibler Schlauch nach Anspruch 3, **dadurch gekennzeichnet, dass** das SEEPS Polystyrol-b-poly(ethylen-ethylen/propylen)-b-polystyrol (hydriertes poly(styrol-b-isopren/butadien-b-styrol) mit der CAS-Nr. 366803-77-2 ist.

5. Flexibler Schlauch nach einem der Ansprüche 1 bis 4, **dadurch gekennzeichnet, dass** das Polyolefin ein Polyethylen (PE) ist.

6. Flexibler Schlauch nach Anspruch 5, **dadurch gekennzeichnet, dass** das PE ein PE-HD ist.

7. Flexibler Schlauch nach einem der Ansprüche 1 bis 6, **dadurch gekennzeichnet, dass** das Verhältnis von TPES zu Polyolefin 2 bis 54 M-% TPES zu 46 bis 98 M-% Polyolefin beträgt.

8. Flexibler Schlauch nach einem der Ansprüche 1 bis 7, **dadurch gekennzeichnet, dass** er frei von Weichmachern ist.

9. Verwendung eines flexiblen Schlauches nach einem der Ansprüche 1 bis 8 als Trinkwasserschlauch, insbesondere als Panzerschlauch.
